# EUROPEAN PATENT SPECIFICATION

(11) **EP 3 926 718 B1**
(45) Date of publication and mention of the grant of the patent: **17.12.2025**
(21) Application number: 20777352.4
(22) Date of filing: 26.03.2020
(51) Int. Cl.: H01G 11/28, H01M 4/66, H01G 11/06

(54) **CURRENT COLLECTOR, CONDUCTIVE LAYER FORMING PASTE, ELECTRODE, AND ENERGY STORAGE DEVICE**
STROMKOLLEKTOR, PASTE ZUR HERSTELLUNG EINER ELEKTRISCH LEITENDEN SCHICHT, ELEKTRODE UND ENERGIESPEICHERELEMENT
COLLECTEUR DE COURANT, PÂTE POUR FORMER UNE COUCHE ÉLECTROCONDUCTRICE, ÉLECTRODE ET ÉLÉMENT DE STOCKAGE D'ÉNERGIE

(30) Priority: 27.03.2019 JP 2019060110
(43) Date of publication of application: 22.12.2021
(73) Proprietor: GS Yuasa International Ltd., Kisshoin, Minami-ku, Kyoto-shi, Kyoto 601-8520 (JP)
(72) Inventor: UMEMURA, Masatoshi, Kyoto-shi, Kyoto 601-8520 (JP); YAMANOI, Asuka, Kyoto-shi, Kyoto 601-8520 (JP); MUKAI, Hiroshi, Kyoto-shi, Kyoto 601-8520 (JP); SUKINO, Koji, Kyoto-shi, Kyoto 601-8520 (JP)
(74) Representative: Isarpatent
(86) International application number: PCT/JP2020/013548
(87) International publication number: WO 2020/196710

(56) References cited:
- WO-A1-2012/005301
- WO-A1-2013/021630
- WO-A1-2015/046126
- JP-A- 2003 157 852
- JP-A- 2006 526 878
- JP-A- 2015 109 214
- JP-A- 2017 220 467
- JP-A- 2018 106 879
- JP-A- H09 180 758
- JP-A- H09 180 758
- US-A1- 2006 188 783
- US-A1- 2017 352 866
- US-B2- 7 846 584

## Description

### TECHNICAL FIELD

The present invention relates to a current collector, a conductive layer forming paste, an electrode, and an energy storage device.

### BACKGROUND ART

Secondary batteries typified by lithium ion secondary batteries are widely in use for electronic equipment such as personal computers and communication terminals, automobiles, and the like because the batteries have high energy density. In such an energy storage device such as a secondary battery or a capacitor, an abnormality such as heat generation may occur due to usually unforeseen use or the like.

For this reason, an electrode having a function (hereinafter, also referred to as the shutdown function) of cutting off a current with an increase in temperature, and an energy storage device including such an electrode have been developed. As the electrode having the above function, an electrode including an active material layer containing a thermally expandable powder that causes volume expansion at a predetermined temperature or higher (Patent Document 1) and an electrode including an undercoat layer containing an organic binder that evaporates or decomposes when heated to a predetermined temperature or higher (Patent Document 2) are known.Patent Document 3 discloses further electrodes for energy storage devices.

### PRIOR ART DOCUMENTS

### PATENT DOCUMENTS

Patent Document 1: JP-A-2003-31208
Patent Document 2: WO 2012/005301 A
Patent Document 3: US2017/352866 A1

### SUMMARY OF THE INVENTION

### PROBLEMS TO BE SOLVED BY THE INVENTION

However, there is room for improvement in the above-described functions of the related art, and it is also effective to develop a large number of means and use these means properly or in combination.

The present invention has been made based on the above circumstances, and an object of the present invention is to provide a current collector capable of suppressing heat generation of an energy storage device when an internal short-circuit occurs due to use that is not a normally foreseeable use form or use state, an electrode including the current collector, an energy storage device including the electrode, and a conductive layer forming paste.

### MEANS FOR SOLVING THE PROBLEMS

One aspect of the present invention made to solve the above problems is a current collector as defined in appended claim 1.

Another aspect of the present invention made to solve the above problems is a conductive layer forming paste as defined in appended claim 2.

Another aspect of the present invention made to solve the above problems is an electrode including the current collector.

Still another aspect of the present invention made to solve the above problems is an energy storage device including the electrode.

### ADVANTAGES OF THE INVENTION

According to the present invention, it is possible to provide a current collector capable of suppressing heat generation of an energy storage device at the time of internal short circuit, an electrode including the current collector, an energy storage device including the electrode, and a conductive layer forming paste.

### BRIEF DESCRIPTION OF THE DRAWINGS

Fig. 1 is a diagram for explaining an action mechanism of the present example.
Fig. 2 is a TG-DTA graph of magnesium hydroxide used in the present example.
Fig. 3 is an external perspective view showing a nonaqueous electrolyte secondary battery according to an embodiment of the present invention.
Fig. 4 is a schematic view illustrating an energy storage apparatus configured by aggregating a plurality of nonaqueous electrolyte secondary batteries according to one embodiment of the present invention.

### MODE FOR CARRYING OUT THE INVENTION

One aspect of the present invention is a current collector including: a conductive layer serving as an underlayer of an active material layer; and a conductive substrate, in which the conductive layer includes a conductive material, an inorganic oxide, a binder, and an inorganic compound thermally decomposed at 100°C or higher and 800°C or lower.

In an energy storage device including an electrode in which the active material layer is formed on the current collector, heat generation is suppressed even when an internal short circuit occurs due to use that is not a normally foreseeable use form or use state. Although the reason why such an effect occurs is not clear, the following reason is presumed.

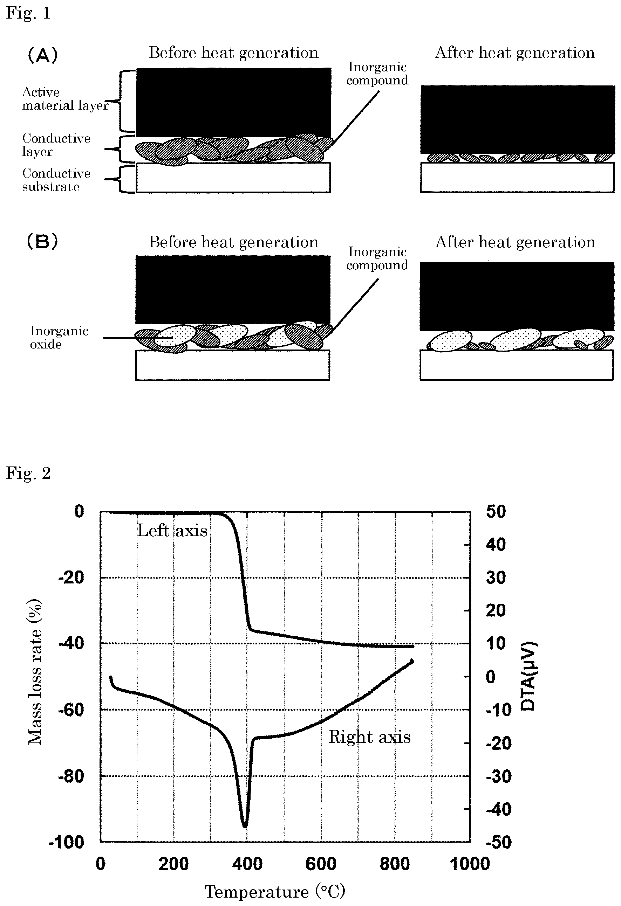

In the energy storage device, for example, when heat is generated inside the energy storage device due to occurrence of internal short-circuit, the inorganic compound contained in the conductive layer is thermally decomposed (at a temperature of 100°C or higher and 800°C or lower). By the decomposition of the inorganic compound, adhesion between the conductive substrate and the active material layer is reduced, so that electric resistance increases. In a nail penetration test simulating a case where the energy storage device is internally short-circuited, a maximum attainable temperature of a nail pierced through the energy storage device is about 800°C; therefore, by setting the upper limit of a thermal decomposition temperature of the inorganic compound to 800°C, the inorganic compound is reliably thermally decomposed at the time of internal short circuiting of the energy storage device, and the electric resistance between the conductive substrate and the active material layer can be reliably increased. Here, when the conductive layer further contains an inorganic oxide (Fig. 1(B), corresponding to Example), the inorganic oxide can more effectively prevent a contact between the active material layer and the conductive substrate even after the inorganic compound is thermally decomposed by heat generation, so that the electric resistance can be further increased as compared with a case where the conductive layer contains no inorganic oxide (Fig. 1(A), corresponding to Comparative Example). Thus, even after the inorganic compound is thermally decomposed by heat generation, it is possible to prevent a large current from flowing inside the energy storage device and further heat generation. In Fig 1, a conductive material and a binder are not illustrated.

The energy storage device exhibits an effect not only by a small energy storage device of about 900 mAh but also by a large energy storage device.

In an electrode (not having the conductive layer) prepared by applying an active material layer forming paste, containing an active material, a conductive material, a binder, an inorganic oxide, and an inorganic compound thermally decomposed at 100°C or higher and 800°C or lower, on a conductive substrate, even if the inorganic compound is thermally decomposed, a contact state between an active material layer and the conductive substrate is hardly changed, and an effect of enhancing electric resistance is not sufficiently obtained.

Similarly, even when a layer containing an inorganic oxide and an inorganic compound thermally decomposed at 100°C or higher and 800°C or lower is formed between the active material layer and the separator, the effect of increasing the electric resistance is not obtained.

### (Conductive substrate)

For the conductive substrate, in the case of a positive electrode, a metal such as aluminum, titanium, tantalum, or stainless steel, or an alloy thereof is used. Among these, aluminum and aluminum alloys are preferable from the viewpoint of the balance of electric potential resistance, high conductivity, and cost. Example of the form of the positive electrode substrate include a foil and a vapor deposition film, and a foil is preferred from the viewpoint of cost. That is, the positive electrode substrate is preferably an aluminum foil. Examples of the aluminum or aluminum alloy include A1085, A3003, A1N30, and the like specified in JIS-H-4000 (2014) or JIS-H-4160 (2006).

In the case of the negative electrode, as the material, a metal such as copper, nickel, stainless steel, or a nickel-plated steel or an alloy thereof is used, and copper or a copper alloy is preferable. That is, the negative electrode substrate is preferably a copper foil. Examples of the copper foil include rolled copper foil, electrolytic copper foil, and the like.

### (Conductive layer)

The conductive layer includes a conductive material, an inorganic oxide, a binder, and an inorganic compound thermally decomposed at 100°C or higher and 800°C or lower.

The conductive material is not particularly limited as long as it has conductivity. Examples of the conductive material include carbon black such as furnace black, acetylene black, and ketjen black, natural or artificial graphite, metals, and conductive ceramics. Among these materials, carbon black is preferable. The shape of the conductive material is usually particulate.

Examples of the binder (binding agent) include: thermoplastic resins such as fluororesin (polytetrafluoroethylene (PTFE), polyvinylidene fluoride (PVdF), etc.), polyethylene, polypropylene, and polyimide; elastomers such as ethylene-propylene-diene rubber (EPDM), sulfonated EPDM, styrene-butadiene rubber (SBR), and fluororubber; and polysaccharide polymers. Among these, a resin that swells with heating is preferable, specifically a fluororesin is preferable, and PVdF is more preferable from the viewpoint of exhibiting a good PTC function.

Specific examples of the inorganic compound thermally decomposed at 100°C or higher and 800°C or lower include a carbonic acid compound, a hydrogen carbonate compound, a hydroxide oxide, a hydrate, and a hydroxide, the carbonic acid compound and the hydroxide are preferable, and the hydroxide is more preferable since non-combustible water is released by thermal decomposition.

Examples of the carbonate compound include carbonates of alkaline earth metals such as magnesium carbonate, aluminum carbonate, zinc carbonate, and manganese carbonate. Among these, an alkaline earth metal carbonate is preferable, and magnesium carbonate is more preferable.

Examples of the hydrogen carbonate compound include hydrogen carbonates of alkali metals such as sodium hydrogen carbonate and potassium hydrogen carbonate, and hydrogen carbonates of alkaline earth metals such as calcium hydrogen carbonate. Among these, a hydrogen carbonate of an alkali metal is preferable, and sodium hydrogen carbonate is more preferable.

Examples of the hydroxide oxide include aluminum hydroxide oxide (boehmite and the like) and magnesium hydroxide oxide.

Examples of the hydrate include calcium sulfate dihydrate and copper sulfate pentahydrate. In the present specification, dehydration reaction from the hydrate is also thermal decomposition reaction.

Examples of the hydroxide include hydroxides of alkaline earth metals such as magnesium hydroxide and calcium hydroxide, and hydroxides of zinc hydroxide and aluminum hydroxide.

The inorganic compound thermally decomposed at 100°C or higher and 800°C or lower can be used by mixing one kind or two or more kinds of the above materials.

The lower limit of the temperature at which the inorganic compound is decomposed is preferably 130°C, and more preferably 160°C. This makes it possible to reduce the possibility that the inorganic compound is decomposed in a drying step after preparing the electrode. The upper limit of the temperature at which the inorganic compound is decomposed is preferably 800°C, more preferably 700°C, and still more preferably 600°C. The shape of the inorganic compound is particulate in the conductive layer during normal use. The inorganic compound is usually insulating.

The inorganic compound thermally decomposed at 100°C or higher and 800°C or lower preferably generates a flame-retardant and non-combustible gas with decomposition. Examples of the flame-retardant and non-combustible gas include carbon dioxide, water (steam), and nitrogen, and among these, water is preferable.

The shape of the inorganic compound thermally decomposed at 100°C or higher and 800°C or lower is not particularly limited, but is preferably a rod shape. When the inorganic compound is rod-shaped, an anchor effect is enhanced, and melt outflow of the binder can be sufficiently suppressed. Furthermore, when the inorganic compound is rod-shaped, decomposition with heating is likely to occur. The "rod shape" refers to particles having a ratio of major axis to minor axis of 2 or more, and particles having the ratio of 5 or more are preferable. The upper limit for this ratio may be, for example, 100. The minor axis and major axis are average values of high-order five particles, which have a large major axis, in one field of view in which six or more particles of an inorganic compound are observed with a scanning electron microscope (SEM). The lower limit of the minor axis of the rod-shaped inorganic compound is preferably 0.01 µm, and more preferably 0.1 µm. The upper limit of the minor axis is preferably 10 µm, and more preferably 4 µm.

A decomposition temperature of the inorganic oxide is preferably higher than the decomposition temperature of the inorganic compound.

The inorganic oxide is preferably not decomposed at a temperature of 600°C or lower. It is more preferable that the inorganic oxide is not decomposed at a temperature of 800°C or lower, and it is still more preferable that the inorganic oxide is not decomposed at a temperature of 1000°C or lower. As a result, even when heat is generated inside the energy storage device and the inorganic compound is decomposed, the inorganic oxide remains between the active material layer and the conductive substrate, so that contact between the active material layer and the conductive substrate can be further suppressed, and the electric resistance can be increased.

The inorganic oxide is preferably particulate. The lower limit of an average particle size of the inorganic oxide is preferably 0.1 µm, and more preferably 0.5 µm. The upper limit of the average particle size is preferably 5 µm, and more preferably 3 µm.

The inorganic oxide is selected from the group consisting of silicon oxide (silica), aluminum oxide (alumina), magnesium oxide, manganese oxide, iron oxide, cobalt oxide, nickel oxide, copper oxide, zirconium oxide, and titanium oxide. These may be used alone or in combination of two or more. Among these, silica and alumina are preferable from the viewpoint of ease of handling.

As the inorganic oxide and the inorganic compound thermally decomposed at 100°C or higher and 800°C or lower, an inorganic oxide and an inorganic compound that electrochemically react with ions involved in charge and discharge within a potential range used are excluded. For example, in the nonaqueous electrolyte battery as in the present example described later in which lithium ions are involved in charge and discharge, an inorganic oxide (for example, LiCoO₂, LiMn₂O₄, Li(NiCoMn)O₂, or the like) represented by Li_{X}Me_{Y}O_{Z} (used for the positive electrode and having an operating potential range of from 2.8 to 4.3 V (vs. Li/Li⁺)) (0 < X ≤ 2, 0 < Y ≤ 1, 0 < Z ≤ 2, and Me is a transition metal) is not contained because it electrochemically reacts with lithium ions.

The upper limit of a content of the conductive material in the conductive layer is preferably 30 mass%, more preferably 25 mass%, and still more preferably 20 mass% with respect to 100 mass% of the conductive layer. If the content is equal to or less than the above upper limit, when the inorganic compound is thermally decomposed, separation between the conductive materials or separation between the substrate and the active material layer easily occurs, and the electric resistance can be further increased. The lower limit of the content of the conductive material is preferably 3 mass%, more preferably 4 mass%, still more preferably 7 mass%, and even more preferably 10 mass% with respect to 100 mass% of the conductive layer. When the content is equal to or more than the lower limit, a sufficient amount of the conductive material can be present in the conductive layer, and good conductivity during normal operation can be secured. The content of the conductive material may be equal to or more than any of the above lower limits and equal to or less than any of the above upper limits.

The upper limit of a content of the inorganic compound thermally decomposed at 100°C or higher and 800°C or lower in the conductive layer is preferably 80 mass%, more preferably 70 mass%, still more preferably 60 mass%, and even more preferably 50 mass% with respect to 100 mass% of the conductive layer. When the content is equal to or less than the above upper limit, good conductivity can be imparted during normal use. The lower limit of the content of the inorganic compound thermally decomposed at 100°C or higher and 800°C or lower in the conductive layer is preferably 10 mass%, more preferably 15 mass%, and still more preferably 25 mass% with respect to 100 mass% of the conductive layer. When the content is equal to or more than the above lower limit, a sufficient shutdown function can be provided when the inorganic compound is decomposed with generation of heat. The content of the inorganic compound may be equal to or more than any of the above lower limits and equal to or less than any of the above upper limits.

The upper limit of a content of the inorganic compound in the conductive layer may be, for example, 80 mass% and is preferably 60 mass%, more preferably 50 mass%, and still more preferably 40 mass% with respect to 100 mass% of the conductive layer. When the content is equal to or less than the above upper limit, good conductivity can be imparted during normal use. The lower limit of the content of the inorganic oxide in the conductive layer is preferably 10 mass%, more preferably 15 mass%, and still more preferably 25 mass% with respect to 100 mass% of the conductive layer. When the content is equal to or more than the above lower limit, even after the inorganic compound is decomposed with the generation of heat, the contact between the active material layer and the conductive substrate can be more reliably suppressed, and the electric resistance can be further increased. Thus, a use amount of the inorganic compound thermally decomposed at 100°C or higher and 800°C or lower can be reduced, and a thickness of the conductive layer can be reduced. This makes it possible to suppress a decrease in discharge capacity per unit volume.

The lower limit of a mass ratio of the inorganic compound thermally decomposed at 100°C or higher and 800°C or lower to the mass of the conductive material in the conductive layer is preferably 1.2 times, more preferably 2 times, and still more preferably 3 times. If the mass ratio of the inorganic compound thermally decomposed at 100°C or higher and 800°C or lower to the mass of the conductive material is equal to or more than the above lower limit, when the inorganic compound is thermally decomposed, separation between the conductive materials or separation between the substrate and the active material layer easily occurs, and the electric resistance can be further increased. The upper limit of the mass ratio of the inorganic compound thermally decomposed at 100°C or higher and 800°C or lower to the mass of the conductive material in the conductive layer is preferably 10 times, more preferably 8 times, and still more preferably 6 times. When the mass ratio of the inorganic compound thermally decomposed at 100°C or higher and 800°C or lower to the conductive material is equal to or less than the upper limit, a sufficient amount of the conductive material can be present in the conductive layer, and good conductivity during normal operation can be secured. The mass ratio of the inorganic compound to the mass of the conductive material may be equal to or more than any of the above lower limits and equal to or less than any of the above upper limits.

The lower limit of a mass ratio of the inorganic oxide to the mass of the inorganic compound thermally decomposed at 100°C or higher and 800°C or lower in the conductive layer is 0.2 times, more preferably 0.25 times, and still more preferably 0.3 times. When the mass ratio of the inorganic oxide to the mass of the inorganic compound thermally decomposed at 100°C or higher and 800°C or lower is equal to or more than the above lower limit, even after the inorganic compound is decomposed with the generation of heat, the contact between the active material layer and the conductive substrate can be more reliably suppressed. On the other hand, the upper limit of the mass ratio of the inorganic oxide to the mass of the inorganic compound thermally decomposed at 100°C or higher and 800°C or lower is 4 times, more preferably 3.5 times, and still more preferably 3 times. If the mass ratio of the inorganic oxide to the mass of the inorganic compound thermally decomposed at 100°C or higher and 800°C or lower is equal to or less than the above upper limit, when the inorganic compound is thermally decomposed, separation between the conductive materials or separation between the substrate and the active material layer easily occurs, and the electric resistance can be further increased.

The lower limit of a content of the binder in the conductive layer is preferably 5 mass%, and more preferably 10 mass% with respect to 100 mass% of the conductive layer. On the other hand, the upper limit of the content is preferably 30 mass%, and more preferably 20 mass% with respect to 100 mass% of the conductive layer. With the content of the binder in the conductive layer falling within the aforementioned range, a sufficient binding property and separability between the conductive materials or layers during heat generation can be exhibited in a well-balanced manner. The content of the binder may be equal to or more than any of the above lower limits and equal to or less than any of the above upper limits.

An average thickness of the conductive layer after pressing the electrode is not particularly limited, and the lower limit is preferably 1 µm, more preferably 2 µm, and still more preferably 4 µm. When the average thickness of the conductive layer is equal to or more than the above lower limit, the shutdown function can be further enhanced. On the other hand, the upper limit of the average thickness is preferably 10 µm, and more preferably 8 µm. When the average thickness of the conductive layer is equal to or less than the above upper limit, it is possible to reduce a possibility that charge-discharge cycle performance is deteriorated. That is, the thickness of the conductive layer is preferably 1 µm to 10 µm, more preferably 2 µm to 10 µm, and still more preferably 4 µm to 8 µm.

The thickness of the conductive layer can be confirmed, for example, by SEM observation of a cross section of the electrode.

The conductive layer covers preferably 50% or more, more preferably 70% or more, and still more preferably 90% or more of an area of one surface of the conductive substrate. The conductive layer does not have to cover 100% of the area.

The conductive layer only needs to cover at least one surface of the conductive substrate, and may cover both surfaces.

Although the conductive layer may be under either the positive active material layer or the negative active material layer, when the conductive layer is under the positive active material layer, the effect is more exhibited. In general, the conductivity of the positive active material layer is lower than the conductivity of the negative active material layer. Also for the conductive substrate, in general, the substrate included in the positive electrode is lower in conductivity than the substrate included in the negative electrode. As described above, by applying the current collector to a positive electrode generally having relatively low conductivity, a function of decreasing the conductivity at the time of heat generation is more effectively exhibited.

Another aspect of the present invention is a conductive layer forming paste including a conductive material, an inorganic oxide, a binder, and an inorganic compound thermally decomposed at 100°C or higher and 800°C or lower. By applying the conductive layer forming paste to a conductive substrate and drying the conductive layer forming paste, it is possible to produce a current collector which includes a conductive layer and the conductive substrate and in which the conductive layer includes a conductive material, an inorganic oxide, a binder, and an inorganic compound thermally decomposed at 100°C or higher and 800°C or lower.

Still another aspect of the present invention is an electrode for an energy storage device including an active material layer on the conductive layer of the current collector.

Still another aspect of the present invention is an energy storage device including the electrode.

### (Positive active material layer)

The positive active material layer is formed of a so-called positive electrode mixture containing a positive active material. The positive composite that forms the positive active material layer contains optional components such as a conductive material, a binder, a thickener and a filler as necessary.

Examples of the positive active material include composite oxides represented by LiₓMO_{y}(M represents at least one transition metal) (LiₓCoO₂, LiₓNiO₂, LiₓMnO₃, LiₓNi_{α}Co(_{1-α})O₂, LiₓNi_{α}Mn_{β}Co(_{1-α-β})O₂ and the like each having a layered α-NaFeO₂-type crystal structure, and LiₓMn₂O₄, LiₓNi_{α}Mn(_{2-α})O₄ and the like each having a spinel-type crystal structure), and polyanion compounds represented by Li_{w}Meₓ(XO_{y})_{z} (Me represents at least one transition metal, and X represents, for example, P, Si, B, V or the like) (LiFePO₄, LiMnPO₄, LiNiPO₄, LiCoPO₄, Li₃V₂(PO₄)₃, Li₂MnSiO₄, Li₂CoPO₄F and the like). The element or polyanion in these compounds may be partially substituted by another element or anion species. In the positive active material layer, one of these compounds may be used alone, or two or more compounds may be mixed.

The conductive material and the binder contained in the positive active material layer may be the same as those of the conductive layer.

Examples of the thickener include polysaccharide polymers such as carboxymethyl cellulose (CMC) and methyl cellulose. When the thickener has a functional group that reacts with lithium, it is preferable to inactivate the functional group by methylation or the like in advance.

The filler is not particularly limited. The main components of the filler include polyolefins such as polypropylene and polyethylene, silica, alumina, zeolite, and glass.

### (Production method)

A method of producing the current collector and the electrode is not particularly limited. The current collector can be obtained by preparing a conductive layer forming paste including a conductive material, an inorganic oxide, a binder, and an inorganic compound thermally decomposed at 100°C or higher and 800°C or lower, applying the paste to a conductive substrate, and drying the paste. Thereafter, an active material layer forming paste containing an active material is applied thereon and dried, whereby the electrode can be obtained.

### <Secondary battery (nonaqueous electrolyte energy storage device)>

A secondary battery (nonaqueous electrolyte energy storage device) according to an embodiment of the present invention includes a positive electrode, a negative electrode, and a nonaqueous electrolyte. The positive electrode and the negative electrode usually form an electrode assembly stacked or wound with a separator interposed therebetween. The electrode assembly is housed in a case, and the case is filled with the nonaqueous electrolyte. The nonaqueous electrolyte is interposed between the positive electrode and the negative electrode. As the case, a known metal case, a resin case or the like, which is usually used as a case of a secondary battery, can be used.

Although the negative electrode substrate may have the same configuration as that of the positive electrode substrate, as the material, metals such as copper, nickel, stainless steel, and nickel-plated steel or alloys thereof are used, and copper or a copper alloy is preferable. That is, the negative electrode substrate is preferably a copper foil. Examples of the copper foil include rolled copper foil, electrolytic copper foil, and the like.

The negative active material layer is formed of a so-called negative electrode mixture containing a negative active material. The negative mixture that forms the negative active material layer contains optional components such as a conductive material, a binder, a thickener and a filler as necessary. As regards the optional component such as a conducting material, a binding agent, a thickener, or a filler, it is possible to use the same component as in the positive active material layer.

As the negative active material, a material capable of absorbing and releasing lithium ions is usually used. Specific examples of the negative active material include metals or metalloids such as Si and Sn; metal oxides or metalloid oxides such as a Si oxide and a Sn oxide; a polyphosphoric acid compound; and carbon materials such as graphite and non-graphitic carbon (easily graphitizable carbon or hardly graphitizable carbon).

In addition, the negative mixture (negative active material layer) may also contain a typical nonmetal element such as B, N, P, F, Cl, Br, or I, a typical metal element such as Li, Na, Mg, Al, K, Ca, Zn, Ga, or Ge, or a transition metal element such as Sc, Ti, V, Cr, Mn, Fe, Co, Ni, Cu, Mo, Zr, Ta, Hf, Nb, or W.

### (Separator)

As the material of the separator, for example, a woven fabric, a nonwoven fabric, a porous resin film, or the like is used. Among these materials, a porous resin film is preferable. As a main component of the porous resin film, for example, a polyolefin such as polyethylene or polypropylene is preferable from the viewpoint of strength. A porous resin film in which these resins are combined with a resin such as aramid or polyimide may be used.

### (Nonaqueous electrolyte)

As the nonaqueous electrolyte, a known electrolyte usually used in a nonaqueous electrolyte secondary battery can be used, and a nonaqueous electrolyte in which an electrolyte salt is dissolved in a nonaqueous solvent can be used.

Examples of the nonaqueous solvents include cyclic carbonates such as ethylene carbonate (EC), propylene carbonate (PC), and butylene carbonate (BC), and open-chain carbonates such as diethyl carbonate (DEC), dimethyl carbonate (DMC), and ethyl methyl carbonate (EMC).

Examples of the electrolyte salt include a lithium salt, a sodium salt, a potassium salt, a magnesium salt, and an onium salt, but a lithium salt is preferable. Examples of the lithium salt include inorganic lithium salts such as LiPF₆, LiPO₂F₂, LiBF₄, LiClO₄, and LiN(SO₂F)₂, and lithium salts having a fluorinated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃ and LiC(SO₂C₂F₃)₃.

As the nonaqueous electrolyte, a salt that is melted at normal temperature, ionic liquid, a polymer solid electrolyte, or the like can also be used.

### (Production method)

A method of manufacturing the secondary battery is not particularly limited. The method of producing the secondary battery includes, for example, a step of preparing a positive electrode, a step of preparing a negative electrode, a step of preparing a nonaqueous electrolyte, a step of forming an electrode assembly in which the positive electrode and the negative electrode are alternately superposed by stacking or winding the positive electrode and the negative electrode with a separator interposed between the electrodes, a step of housing the positive electrode and the negative electrode (electrode assembly) in a battery case, and a step of injecting the nonaqueous electrolyte into the battery case. A nonaqueous electrolyte secondary battery (nonaqueous electrolyte energy storage device) can be obtained by sealing an injection port after the injection. The details of each element constituting the nonaqueous electrolyte energy storage device secondary battery) obtained by the manufacturing method are as described above.

### <Other embodiments>

The present invention is defined by the appended claims.

In the above embodiment, the energy storage device is a nonaqueous electrolyte secondary battery, but other energy storage devices may be used. Examples of another energy storage device include capacitors (electric double layer capacitors and lithium ion capacitors) and secondary batteries in which an electrolyte contains water.

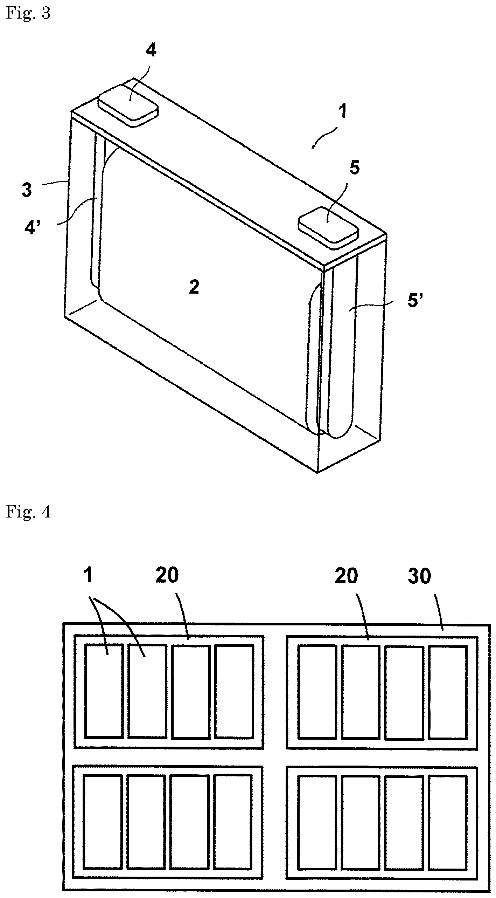

Fig. 3 is a schematic view of a rectangular nonaqueous electrolyte secondary battery 1 (secondary battery 1) as one embodiment of the energy storage device according to the present invention. Fig. 3 is a view showing the inside of a case in a perspective manner. In the secondary battery 1 shown in Fig. 3, an electrode assembly 2 is housed in a battery case 3. The electrode assembly 2 is formed by winding a positive electrode provided with a positive active material and a negative electrode provided with a negative active material via a separator. The positive electrode is electrically connected to a positive electrode terminal 4 via a positive electrode lead 4', and the negative electrode is electrically connected to a negative electrode terminal 5 via a negative electrode lead 5'. A nonaqueous electrolyte is injected into the battery case 3. The specific configuration of each element such as the positive electrode is as described above.

The configuration of the energy storage device according to the present invention is not particularly limited, and examples include cylindrical batteries, prismatic batteries (rectangular batteries) and flat batteries. The present invention can also be realized as an energy storage apparatus including a plurality of the nonaqueous electrolyte energy storage devices. Fig. 4 shows one embodiment of an energy storage apparatus. In Fig. 4, an energy storage apparatus 30 includes a plurality of energy storage units 20. Each of the energy storage units 20 includes a plurality of the secondary batteries 1. The energy storage apparatus 30 can be mounted as a power source for an automobile such as an electric vehicle (EV), a hybrid vehicle (HEV), a plug-in hybrid vehicle (PHEV), or the like.

### EXAMPLES

Hereinafter, the present invention will be described more specifically by way of examples, but the present invention is not limited to the following examples.

### [TG measurement]

TG-DTA measurement was performed on magnesium hydroxide ("MAGUSHIZU X-6" from Konoshima Co., Ltd., average particle size 0.9 µm, BET specific surface area 7 m²/g). The temperature was raised to 850°C at 10°C/min under an oxygen flow (100 mL/min), and a mass loss rate and DTA at that time were recorded. Fig. 2 is a graph of TG-DTA obtained.

Fig. 2 shows that the mass of magnesium hydroxide decreases by about 30% around 400°C. The mass reduction of magnesium hydroxide around 400°C is considered to be due to thermal decomposition of magnesium hydroxide. Assuming a reaction of Mg(OH)₂ → MgO + H₂O, the mass loss is about 30% in calculation.

### [Example 1]

### (Preparation of positive electrode)

The magnesium hydroxide, alumina, acetylene black (AB), and polyvinylidene fluoride (PVdF) were weighed at a mass ratio of 38.5 : 38.5 : 8 : 15. These materials were mixed with N-methyl-2-pyrrolidone (NMP) as a dispersion medium to prepare a conductive layer forming paste. The conductive layer forming paste was applied to the surface of an aluminum foil (average thickness: 15 µm) as a conductive substrate and dried to obtain a current collector.

A positive active material layer forming paste containing Li(Ni_{0.3}Co_{0.2}Mn_{0.3})O₂, AB and PVdF as positive active materials at a mass ratio of 93 : 4 : 3 (in terms of solid content) and using NMP as a dispersion medium was prepared. The positive active material layer forming paste was applied onto the surface of the conductive layer of the current collector, dried to remove the dispersion medium, and press-molded by a roller press machine. Thereafter, drying was performed under a reduced pressure atmosphere to obtain a positive electrode of Example 1. The average thickness of the conductive layer after pressure molding was found to be about 4 µm per one side by observation of a cross-sectional SEM image. The conductive layer and the positive active material layer are provided on both sides of the aluminum foil. The positive electrode was provided with a tab on which the conductive layer and the positive active material layer were not stacked.

### (Preparation of negative electrode)

Graphite, carboxymethyl cellulose (CMC), and styrene-butadiene rubber (SBR) were mixed at a composition (solid content ratio) of 98 : 1 : 1 to prepare a negative active material layer forming paste using water as a dispersion medium. The negative active material layer forming paste was applied to both sides of a copper foil, dried, and pressed to obtain a negative electrode.

### (Preparation of nonaqueous electrolyte)

Lithium hexafluorophosphate (LiPF₆) was dissolved at 1.0 mol/dm³ in a solvent obtained by mixing ethylene carbonate (EC), propylene carbonate (PC), and ethyl methyl carbonate (EMC) at a volume ratio of 25 : 5 : 70 to obtain a nonaqueous electrolyte.

### (Production of energy storage device)

The positive electrode and the negative electrode were stacked via a separator made of a polyethylene microporous film and wound into a flat shape to produce an electrode assembly. The electrode assembly was housed into an aluminum prismatic container case, and a positive electrode terminal and a negative electrode terminal were attached. After the nonaqueous electrolyte was injected into the case (prismatic container can), the nonaqueous electrolyte was sealed to obtain an energy storage device (hereinafter, also referred to as a "test cell").

### [Comparative Example 1]

An energy storage device of Comparative Example 1 was obtained in the same manner as in Example 1, except that the conductive layer was not provided.

### [Example 2, and Comparative Examples 2 to 4]

Energy storage devices according to Example 2 and Comparative Examples 2 to 4 were produced by the same procedure as in Example 1 except that the conductive material in the conductive layer and the ratio thereof were as shown in Table 1. Here, "-" means that the material is not used, and the unit is mass%. As MgCO₃ and Al₂O₃, the following compounds were used.
MgCOs: "MAGTHERMO MS-S" from Konoshima Co., Ltd., average particle size: 1.2 µm, BET specific surface area: 5.5 m²/g
Al₂O₃: "AKP-3000" from Sumitomo Chemical Co., Ltd., average particle size: 0.7 µm, BET specific surface area: 11.7 m²/g

### [Evaluation]

### (Initial charge-discharge)

The following charge and discharge were performed in a thermostatic bath at 25°C for a plurality of test cells according to Examples and Comparative Examples obtained in the above procedure.

### (1) Charging step

Constant current charge was performed up to 4.25 V at a current value of 1/3 C. When the voltage reached 4.25 V, the voltage was maintained, and when the total time of charging reached 5 hours, the charging was ended (so-called constant current constant voltage charge). Then, pausing was carried out for 10 minutes.

### (2) Discharging step

Constant current discharge was performed up to 2.75 V at a current value of 1/3 C. When the voltage reached 2.75 V, the discharging was ended, and pausing was carried out for 10 minutes.

After the steps (1) and (2) were performed once, the charge current and the discharge current were changed to 1 C, and the above steps were repeated twice. Next, the charge-discharge was performed once by changing the charge current to 1/3 C and the discharge current to 1 C. A 1C discharge capacity corresponding to the fourth time was recorded as "initial capacity". The initial capacities were all about 900 mAh.

Here, when the cell voltage was 4.25 V, the positive electrode potential was approximately 4.3 V (vs. Li/Li⁺), and when the cell voltage was 2.75 V, the positive electrode potential was approximately 2.8 V (vs. Li/Li⁺).

### (60°C nail penetration test)

The test cells of Examples and Comparative Examples subjected to the initial charge-discharge step were subjected to constant current charge up to 4.25 V at a current value of 1/3 C at 25°C. When the voltage reached 4.25 V, the voltage was maintained, and when the total time of charging reached 5 hours, the charging was ended.

Next, the test cell was set in a jig for a nail penetration test, a thermocouple was attached to a central portion of a largest surface of the test cell, and the test cell was left in a hermetically sealed box set at 60°C for 5 hours. Thereafter, the nail penetration test was performed on the central portion of the largest surface of the test cell under the following conditions. The attachment position of the thermocouple was separated by approximately 3 mm from a nail penetrating point.
Material of nail: SUS 304
Inner dimension of nail: Φ1 mm
Tip angle of nail: 30°
Pushing speed of nail: 1 mm/sec

The results of the nail penetration test are shown in Table 1. Here, the "maximum attainable temperature (°C)" indicates a maximum attainable temperature of the test cell surface indicated by the thermocouple as a result of the nail penetration test.

The "thickness (µm) of the conductive layer before pressing" is obtained by subtracting the thickness of the conductive substrate from an average value obtained by measuring the thickness of the current collector after formation of the conductive layer at nine points using a micrometer. The "thickness (µm) of the conductive layer after pressing" is obtained by averaging three points of the conductive layer by cross-sectional SEM observation for the electrode after the active material layer is formed on the current collector and pressed, and is the thickness of the conductive layer per one side in each case.

**[Table 1]**

| | Mg(OH)₂ | MgCO₃ | Al₂O₃ | AB | PVdF | Maximum attainable temperature (°C) | Thickness of conductive layer before pressing (µm) | Thickness of conductive layer after pressing (µm) |
|---|---|---|---|---|---|---|---|---|
| Example 1 | 38.5 | - | 38.5 | 8 | 15 | 90.7 | 8 | 4 |
| Example 2 | - | 38.5 | 38.5 | 8 | 15 | 117.2 | 5 | 3 |
| Comparative Example 1 | - | - | - | - | - | 200< | - | - |
| Comparative Example 2 | - | - | 77 | 8 | 15 | 200< | 6 | Unmeasured |
| Comparative Example 3 | 77 | - | - | 8 | 15 | 200< | 8 | Unmeasured |
| Comparative Example 4 | - | 73 | - | 12 | 15 | 200< | 6 | Unmeasured |

As can be seen from Table 1, a surface temperature of the test cell was 90.7°C in Example 1, and the surface temperature of the test cell was 117.2°C in Example 2. On the other hand, in all of Comparative Examples 2 to 4 in which Mg(OH)₂, MgCO₃, and Al₂O₃ were used alone, and Comparative Example 1 having no conductive layer, the surface temperature of the test cell exceeded 200°C.

Although the thickness of each conductive layer before pressing was 5 to 8 µm, there was a difference in effect. This is considered to be because in Example 1 and Example 2 in which Al₂O₃ was added, after decomposition of the inorganic compound, Al₂O₃ prevented the contact between the active material layer and the conductive substrate, and more effectively increased the electric resistance, so that heat generation of the test cell could be suppressed.

Even in the configurations of Comparative Example 2 to Comparative Example 4, it is considered that the result of the nail penetration test is improved by further increasing the thickness of the conductive layer before pressing to, for example, 15 to 20 µm; however, the discharge capacity per unit volume decreases.

The test cells of Comparative Example 1, Example 1, and Example 2 were subjected to charge-discharge cycle tests 300 times in the following manner.

### (Charge-discharge cycle test)

For the test cell not subjected to the nail penetration test after the initial charge-discharge, with the steps (1') and (2') regarded as one cycle, this cycle was repeated 300 times in a thermostatic bath at 45°C.

### (1') Charging step

Constant current charge was performed up to 4.25 V at a current value of 1 C. When the voltage reached 4.25 V, the voltage was maintained, and when the total time of charging reached 3 hours, the charging was ended (so-called constant current constant voltage charge). Then, pausing was carried out for 10 minutes.

### (2') Discharging step

Constant current discharge was performed up to 3.45 V at a current value of 1 C. When the voltage reached 3.45 V, the discharging was ended, and pausing was carried out for 10 minutes.

### (Capacity confirmation test after charge-discharge cycle test)

The test cell after 300 cycles was discharged to 2.75 V at a current value of 1 C in a thermostatic bath at 25°C, and then charged and discharged under the same conditions as when the "initial capacity" was measured. The "capacity retention ratio (%)" was obtained by dividing the obtained discharge capacity by the "initial capacity". The obtained capacity retention ratios are summarized in Table 2.

**[Table 2]**

| | Mg(OH)₂ | MgCO₃ | Al₂O₃ | AB | PVdF | Capacity retention ratio (%) |
|---|---|---|---|---|---|---|
| Example 1 | 38.5 | - | 38.5 | 8 | 15 | 100.6 |
| Example 2 | - | 38.5 | 38.5 | 8 | 15 | 100.3 |
| Comparative Example 1 | - | - | - | - | - | 100.0 |

The test cells of Example 1 and Example 2 in which the conductive layer was provided between the current collector and the active material layer maintained the same charge-discharge cycle performance as the test cell of Comparative Example 1 in which the conductive layer was not provided. This is considered to be because the inorganic compound and the inorganic oxide have high electrochemical stability, and have a very high decomposition temperature, so that an increase in resistance between the conductive layer and the active material layer derived from decomposition of the inorganic compound did not occur under the environment of 45°C.

### INDUSTRIAL APPLICABILITY

The present invention can be applied to a nonaqueous electrolyte secondary battery used as a power source for electronic devices such as personal computers and communication terminals, automobiles, and the like.

### DESCRIPTION OF REFERENCE SIGNS

1: nonaqueous electrolyte secondary battery
2: electrode assembly
3: battery case
4: positive electrode terminal
4': positive electrode lead
5: negative electrode terminal
5': negative electrode lead
20: energy storage unit
30: energy storage apparatus

## Claims

1. A current collector comprising:
a conductive layer serving as an underlayer of an active material layer; and
a conductive substrate,
wherein the conductive layer includes a conductive material, an inorganic oxide, a binder, and an inorganic compound thermally decomposed at 100°C or higher and 800°C or lower,
wherein the inorganic oxide is selected from the group consisting of silicon oxide (silica), aluminum oxide (alumina), magnesium oxide, manganese oxide, iron oxide, cobalt oxide, nickel oxide, copper oxide, zirconium oxide, titanium oxide and combinations thereof, and
wherein a mass ratio of the inorganic oxide to the mass of the inorganic compound is 0.2 times or more and 4 times or less.

2. A conductive layer forming paste comprising:
a conductive material;
an inorganic oxide;
a binder; and
an inorganic compound thermally decomposed at 100°C or higher and 800°C or lower,
wherein the inorganic oxide is selected from the group consisting of silicon oxide (silica), aluminum oxide (alumina), magnesium oxide, manganese oxide, iron oxide, cobalt oxide, nickel oxide, copper oxide, zirconium oxide, titanium oxide and combinations thereof, and
wherein a mass ratio of the inorganic oxide to the mass of the inorganic compound is 0.2 times or more and 4 times or less.

3. The current collector according to claim 1, wherein the inorganic compound includes one or more of a carbonate compound, a hydrogen carbonate compound, and a hydroxide (excluding an alkali metal hydroxide).

4. An electrode for an energy storage device comprising an active material layer on the conductive layer of the current collector according to either one of claims 1 and 3.

5. An energy storage device comprising the electrode according to claim 4.

## Patentansprüche

1. Stromkollektor, umfassend:
eine leitfähige Schicht, die als eine Unterschicht einer Aktivmaterialschicht dient; und
ein leitfähiges Substrat,
wobei die leitfähige Schicht ein leitfähiges Material, ein anorganisches Oxid, ein Bindemittel und eine anorganische Verbindung, die bei **100** °C oder höher und 800 °C oder niedriger thermisch zersetzt wird, enthält,
wobei das anorganische Oxid ausgewählt ist aus der Gruppe bestehend aus Siliziumoxid (Silica), Aluminiumoxid (Alumina), Magnesiumoxid, Manganoxid, Eisenoxid, Kobaltoxid, Nickeloxid, Kupferoxid, Zirkoniumoxid, Titanoxid und Kombinationen davon, und
wobei ein Massenverhältnis des anorganischen Oxids zur Masse der anorganischen Verbindung das 0,2-fache oder mehr und das 4-fache oder weniger beträgt.

2. Leitfähige Schicht bildende Paste, umfassend:
ein leitfähiges Material;
ein anorganisches Oxid;
ein Bindemittel; und
eine anorganische Verbindung, die bei 100 °C oder höher und 800 °C oder niedriger thermisch zersetzt wird,
wobei das anorganische Oxid ausgewählt ist aus der Gruppe bestehend aus Siliziumoxid (Silica), Aluminiumoxid (Alumina), Magnesiumoxid, Manganoxid, Eisenoxid, Kobaltoxid, Nickeloxid, Kupferoxid, Zirkoniumoxid, Titanoxid und Kombinationen davon, und
wobei ein Massenverhältnis des anorganischen Oxids zur Masse der anorganischen Verbindung das 0,2-fache oder mehr und das 4-fache oder weniger beträgt.

3. Stromkollektor nach Anspruch 1, wobei die anorganische Verbindung eines oder mehrere von einer Carbonatverbindung, einer Hydrogencarbonatverbindung und einem Hydroxid (mit Ausnahme eines Alkalimetallhydroxids) umfasst.

4. Elektrode für eine Energiespeichervorrichtung, umfassend eine Aktivmaterialschicht auf der leitfähigen Schicht des Stromkollektors nach einem der Ansprüche 1 und 3.

5. Energiespeichervorrichtung, umfassend die Elektrode nach Anspruch 4.

## Revendications

1. Collecteur de courant comprenant :
une couche conductrice servant de sous-couche d'une couche de matériau actif ; et
un substrat conducteur,
dans lequel la couche conductrice inclut un matériau conducteur, un oxyde inorganique, un liant, et un composé inorganique décomposé thermiquement à une température comprise entre 100 °C et 800 °C,
dans lequel l'oxyde inorganique est choisi dans le groupe constitué de l'oxyde de silicium (silice), l'oxyde d'aluminium (alumine), l'oxyde de magnésium, l'oxyde de manganèse, l'oxyde de fer, l'oxyde de cobalt, l'oxyde de nickel, l'oxyde de cuivre, l'oxyde de zirconium, l'oxyde de titane et des combinaisons de ceux-ci, et
dans lequel le rapport massique de l'oxyde inorganique sur la masse du composé inorganique est 0,2 fois ou plus et 4 fois ou moins.

2. Pâte formant une couche conductrice comprenant :
un matériau conducteur ;
un oxyde inorganique ;
un liant ; et
un composé inorganique décomposé thermiquement à une température comprise entre 100 °C et 800 °C,
dans laquelle l'oxyde inorganique est choisi dans le groupe constitué de l'oxyde de silicium (silice), l'oxyde d'aluminium (alumine), l'oxyde de magnésium, l'oxyde de manganèse, l'oxyde de fer, l'oxyde de cobalt, l'oxyde de nickel, l'oxyde de cuivre, l'oxyde de zirconium, l'oxyde de titane et des combinaisons de ceux-ci, et
dans laquelle le rapport massique de l'oxyde inorganique sur la masse du composé inorganique est 0,2 fois ou plus et 4 fois ou moins.

3. Collecteur de courant selon la revendication 1, dans lequel le composé inorganique comprend un ou plusieurs parmi un composé carbonate, un composé hydrogénocarbonate et un hydroxyde (à l'exclusion d'un hydroxyde de métal alcalin).

4. Électrode pour un dispositif de stockage d'énergie comprenant une couche de matériau actif sur la couche conductrice du collecteur de courant selon l'une quelconque des revendications 1 et 3.

5. Dispositif de stockage d'énergie comprenant l'électrode selon la revendication 4.
